# EUROPÄISCHE PATENTSCHRIFT

(11) **EP 0 627 249 B1**
(45) Veröffentlichungstag und Bekanntmachung des Hinweises auf die Patenterteilung: **12.03.1997**
(21) Anmeldenummer: 94250132.1
(22) Anmeldetag: 18.05.1994
(51) Int. Cl.: B01D 1/28, B01D 3/42

(54) **Verfahren und Vorrichtung zur Steuerung der Ausförderung des Rückstandes bei der Destillation von verunreinigten Flüssigkeiten**
Process and apparatus for controlling the blow down of destillation residue from contaminated liquids
Procédé et dispositif pour controller la décharge du résidu de destillation de liquide contaminé

(30) Priorität: 02.06.1993 DE 4318936
(43) Veröffentlichungstag der Anmeldung: 07.12.1994
(73) Patentinhaber: MANNESMANN Aktiengesellschaft, 40213 Düsseldorf (DE)
(72) Erfinder: Walzer, Michael, D-79650 Schopfheim (DE)
(74) Vertreter: Presting, Hans-Joachim, Dipl.-Ing.

(56) Entgegenhaltungen:
- WO-A-92/03203
- DE-A- 2 832 726
- US-A- 2 748 849
- US-A- 4 259 160

## Beschreibung

Die Erfindung betrifft ein Verfahren und eine Vorrichtung zur Steuerung der Ausförderung des Rückstandes bei der Destillation von verschmutzten Industrieabwässern und Lösemiteln mittels mechanischer Brüdenverdichtung gemäß dem Gattungsbegriff des Hauptanspruchs.

Bei der Destillation von verschmutzten Industrieabwässern und Lösungsmitteln mittels mechanischer Brüdenverdichtung (DE-A-28 32 726) wird die Aufkonzentration des Rückstandes üblicherweise entweder über die Siedepunktverschiebung oder über die Zeit bestimmt. Damit lassen sich alle Anwendungsfälle erfassen, bei denen es entweder zu einer entsprechenden Siedepunktverschiebung kommt oder der Prozeß wiederholt in einer bestimmten Zeitspanne abläuft.

Das Verfahren versagt, wenn Flüssigkeiten bzw. Flüssigkeitsgemische gereinigt werden sollen, bei denen es zu keiner Siedepunktverschiebung kommt und der Prozeß auch zeitlich nicht wiederholt abläuft.

Aus US-A-42 59 160 ist ein Destillierapparat mit Brüdenverdichtung bekannt, bei dem in der Leitung für das Abziehen des Destillats ein Temperaturmeßgerät angeordnet ist.

Aufgabe der Erfindung ist es, ein Verfahren zur Steuerung der Ausförderung des Rückstandes bei der Destillation von verschmutzten Industrieabwässern und Lösemitteln mittels mechanischer Brüdenverdichtung anzugeben, mit dem eine genaue Ausförderung des Rückstandes auch dann erreicht wird, wenn keine Siedepunktverschiebung auftritt oder der Prozeß auch zeitlich nicht wiederholt abläuft.

Diese Aufgabe wird mit dem im kennzeichnenden Teil des Hauptanspruches angegebenen Merkmal gelöst. Eine vorteilhafte Weiterbildung des Verfahrens ist Bestandteil eines Unteranspruchs.

Die Erfindung betrifft auch eine Vorrichtung zur Durchführung des Verfahrens.

Der Vorteil der vorgeschlagenen Temperaturmessung des Destillates ist darin zu sehen, daß unabhängig von allen vorstellbaren Anwendungsfällen eine genaue Steuerung der Ausförderung des Rückstandes möglich ist. Außerdem kann man die ermittelte Temperatur dazu verwenden, um eine Aussage über den Verschmutzungsgrad des im Verdampfer angeordneten Rohrbündelwärmetauschers machen zu können. Vorrichtungsmäßig läßt sich die Steuerung in der Art und Weise durchführen, indem man das Temperaturmeßgerät über eine Steuerleitung mit dem Ablaßventil für den Rückstand verbindet.

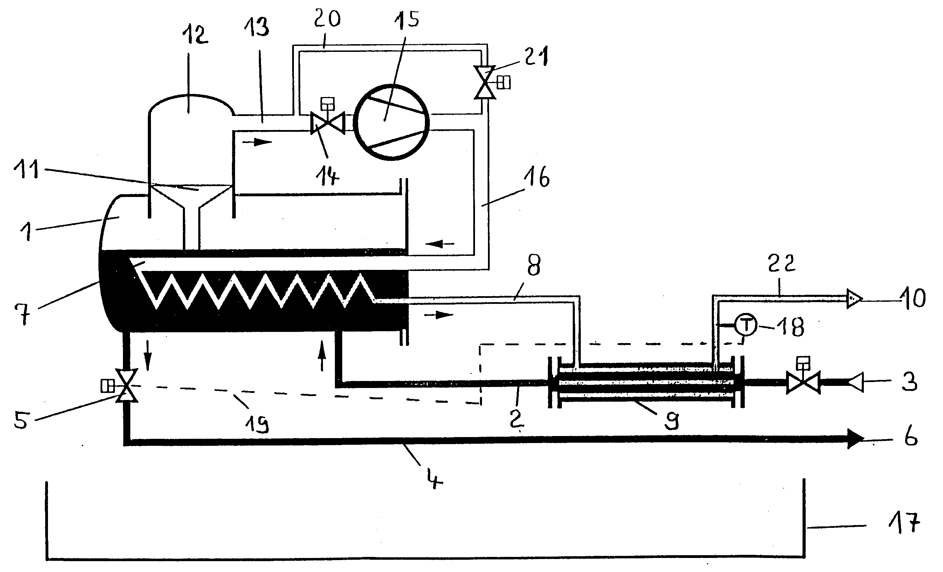

In der einzigen Zeichnung wird anhand eines Prinzipfließbildes einer Anlage mit mechanischer Brüdenverdichtung das erfindungsgemäße Verfahren näher erläutert.

Kern der Anlage ist der Verdampfer 1, dem über eine Leitung 2 die zu reinigende Schmutzware 3 zugeführt und über ein in einer Leitung 4 angeordnetes Ablaßventil 5 der Rückstand 6 gesteuert abgezogen wird. Im Verdampfer 1 ist ein Rohrbündelwärmetauscher 7 angeordnet, in dem die heißen Brüdendämpfe kondensieren und das Destillat über eine Leitung 8 einem weiteren als Rekuperator 9 ausgebildeten Wärmetauscher zugeführt werden. Nach Durchlauf durch den Rekuperator 9 kann das abgekühlte Reindestillat 10 abgezogen werden. Die im Verdampfer 1 über einen Abscheider 11 in den Dom 12 aufsteigenden Brüdendämpfe werden über eine Leitung 13 und einem daran angeordneten Ventil 14 vom Verdichter 15 angesaugt. In der Anfahrphase schützt eine Bypassleitung 20 den Verdichter 15 vor Überlastung. Das Bypassventil 21 bleibt in der Anfahrphase in offener Stellung, so daß ein kontrolliertes Rückströmen der verdichteten Brüdendämpfe auf die Saugseite des Verdichters 15 ermöglicht wird. Dadurch wird vermieden, daß der Unterdruck im Verdampfer 1 einen bestimmten Wert unterschreitet und damit das Druckgefälle für den Verdichter 15 zu groß wird. Bei Erreichen eines bestimmten Prozeßpunktes, in der Regel die Temperatur im Verdampfer 1, wird das Bypassventil 21 wieder geschlossen. Der Verdichter 15 ist üblicherweise als Wälzkolbenpumpe ausgebildet, die die Brüdendämpfe bei einem Druck von einigen hundert mbar und einer Temperatur < 100°C auf Atmosphärendruck verdichtet. Nach der Verdichtung strömen die heißen Brüdendämpfe über eine Leitung 16 durch den Rohrbündelwärmetauscher 7 und kondensieren darin. Um den Prozeß thermodynamisch zu verbessern, ist es bekannt, unter Ausnutzung der Wärmeenergie des Destillates 10 mittels eines Rekuperators 9 die Schmutzware 3 vor dem Verdampfen aufzuheizen. Damit im Falle einer Störung möglichst keine Schmutzware 3 oder Rückstand 6 in die Umgebung gelangen kann, ist es üblich, die gesamte Anlage in einer Bodenwanne 17 anzuordnen.

Zur Steuerung der Ausförderung des Rückstandes 6 aus dem Verdampfer 1 ist erfindungsgemäß an der Destillatleitung 22 ein Temperaturmeßgerät 18 angeordnet. Damit wird fortlaufend die Temperatur des Destillates 10 erfaßt und bei Überschreiten einer festgelegten Maximaltemperatur die Ausförderung des Rückstandes 6 ausgelöst. Dies kann über eine optische oder akustische Anzeige erfolgen oder eleganterweise über eine automatische Regelung. Für den letzteren Fall ist das Temperaturmeßgerät 18 über eine Steuerleitung 19 mit dem Ablaßventil 5 verbunden. Der dazugehörige Regelungsmechanismus ist hier der Einfachheit halber weggelassen worden.

## Patentansprüche

1. Verfahren zur Steuerung der Ausförderung des Rückstandes bei der Destillation von verschmutzten Industrieabwässern und Lösemitteln mittels mechanischer Brüdenverdichtung, bei dem der Zeitpunkt der Ausförderung über die Erfassung eines Prozeßparameters bestimmt wird,
dadurch gekennzeichnet,
daß nach der Kondensation und Abkühlung der Brüdendämpfe die Temperatur des Destillates fortlaufend gemessen und bei Überschreiten eines festgelegten Maximalwertes die Ausförderung des Rückstandes ausgelöst wird.

2. Verfahren nach Anspruch 1,
dadurch gekennzeichnet,
daß der Maximalwert von Erfahrungswerten abgeleitet wird.

3. Vorrichtung zur Durchführung des Verfahrens nach Anspruch 1 mit einem Verdampfer (1), dem über einen vorgeschalteten Rekuperator (9) Schmutzware (3) zugeführt und über ein Ablaßventil (5) Rückstand (6) entzogen wird und in dem ein Rohrbündel (7) als Wärmetauscher angeordnet ist, das über eine Leitung (16) mit dem mechanischen Brüdenverdichter (15) und über eine weitere Leitung (8) mit dem Rekuperator (9) verbunden ist und die im Verdampfer (1) entstehenden Brüdendämpfe über einen Dom (12) und eine Leitung (13) vom Verdichter (15) angesaugt werden, wobei im Bereich der dem Rekuperator (9) verlassenden Leitung (22) für das Abziehen des Destillates (10) ein Temperaturmeßgerät (18) angeordnet ist, das mit einem optischen oder akustischen Anzeigegerät verbunden ist,
dadurch gekennzeichnet,
daß das Temperaturmeßgerät (18) über eine Steuerleitung (19) mit dem Ablaßventil (5) für den Rückstand (6) verbunden ist.

## Claims

1. A method for controlling the extraction of the residue in the distillation of polluted industrial effluent and solvents by means of mechanical vapour compression, in which the time of extraction is determined by detecting a process parameter,
characterised in that
after the condensation and cooling of the vapours the temperature of the distillate is measured constantly and if a set maximum value is exceeded the extraction of the residue is triggered.

2. A method according to Claim 1, characterised in that the maximum value is derived from empirical values.

3. An apparatus for performing the method according to Claim 1, comprising an evaporator (1), to which polluted product (3) is supplied via a preceding recuperator (9) and from which residue (6) is removed via a discharge valve (5) and in which a tube bundle (7) is arranged as a heat exchanger, which bundle is connected via a line (16) to the mechanical vapour compressor (15) and via an additional line (8) to the recuperator (9) and the vapours produced in the evaporator (1) are drawn in from the compressor (15) via a still head (12) and a line (13), with a temperature measurement apparatus (18) being arranged in the region of the line (22) leaving the recuperator (9) for removing the distillate (10), which measurement apparatus is connected to a visual or acoustic display unit, characterised in that the temperature measurement apparatus (18) is connected via a control line (19) to the discharge valve (5) for the residue (6).

## Revendications

1. Procédé pour commander l'évacuation du résidu de distillation d'eaux usées industrielles et de solvants pollués au moyen d'une compression de vapeurs mécanique, dans lequel l'instant de l'évacuation est déterminé par la détection d'un paramètre du processus,
caractérisé en ce que, après la condensation et le refroidissement des vapeurs, la température du distillat est mesurée de façon continue et, lorsqu'une valeur maximale déterminée est dépassée, l'évacuation du résidu est déclenchée.

2. Procédé selon la revendication 1,
caractérisé en ce que la valeur maximale est dérivée de valeurs empiriques.

3. Dispositif pour la mise en oeuvre du procédé selon la revendication 1, comportant un évaporateur (1), auquel le produit pollué (3) est amené par l'intermédiaire d'un récupérateur (9) disposé en amont et le résidu (6) est évacué par l'intermédiaire d'une valve d'évacuation (5), et dans lequel il est agencé un faisceau de tubes (7) comme échangeur thermique, qui est relié, par l'intermédiaire d'un conduit (16), au compresseur de vapeurs mécanique (15) et, par l'intermédiaire d'un autre conduit (8), au récupérateur (9), et les vapeurs créées dans l'évaporateur (1) sont aspirées, par l'intermédiaire d'un dôme (12) et d'un conduit (13), par le compresseur (15), un appareil de mesure de température (18) étant agencé dans la zone du conduit (22), quittant le récupérateur (9), pour l'évacuation du distillat (10), appareil qui est relié à un dispositif d'affichage optique ou acoustique,
caractérisé en ce que l'appareil de mesure de température (18) est relié, par l'intermédiaire d'une liaison de commande (19), à la valve d'évacuation (5) pour le résidu (6).
